# FASCICULE DE BREVET EUROPEEN

(11) **EP 0 612 612 B1**
(45) Date de publication et mention de la délivrance du brevet: **23.04.1997**
(21) Numéro de dépôt: 94420062.5
(22) Date de dépôt: 21.02.1994
(51) Int. Cl.: B32B 27/08, B65D 35/02

(54) **Tube de stockage et de distribution d'un produit par example aromatisé ou parfumé et contenant de l'eau**
Tube zum Lagern und Abgeben eines wasserenthaltenden und ggf aromatisierten oder parfümierten Produktes
Storage and distribution tube for a water-containing product which may be perfumed or flavoured

(30) Priorité: 22.02.1993 FR 9302291; 05.07.1993 FR 9308444
(43) Date de publication de la demande: 31.08.1994
(73) Titulaire: CEBAL S.A., F-92115 Clichy (FR)
(72) Inventeur: Rebeyrolle, Michel, F-51800 Stemenehould (FR); Benquet, Jacques, F-21240 Talani (FR)
(74) Mandataire: Pigasse, Daniel

(56) Documents cités:
- EP-A- 0 095 150
- EP-A- 0 187 541
- GB-A- 2 048 209
- US-A- 3 823 850
- US-A- 5 075 143

## Description

L'invention concerne un tube de stockage et de distribution d'un produit, typiquement liquide, crémeux ou pâteux, ce tube permettant de bien conserver l'arôme ou le parfum du produit contenu.

On connaît, par EP-A-0 084 922 = US-A-4 626 456, un tube de stockage et de distribution d'un produit, par exemple aromatisé ou parfumé et contenant de l'eau, ce tube comprenant une tête de distribution fixée sur une jupe multicouche flexible, cette jupe comportant essentiellement une couche intermédiaire à effet barrière vis-à-vis de l'oxygène et des arômes ou parfums, ladite couche étant sensible à l'humidité, ainsi que sur chaque face de cette couche intermédiaire une ou plusieurs couches polymériques à base de polyoléfines, toutes lesdites couches étant liées entre elles. Le produit contenu est par exemple de la pâte dentifrice, et la couche intermédiaire à effet barrière est par exemple en EVOH (copolymère d'éthylène et d'alcool vinylique). La structure de la jupe, sans couche intermédiaire métallique et comportant des couches essentiellement en polypropylène chargées de poudres par exemple de carbonate de Ca, de mica ou de talc, permet d'obtenir une bonne rétention des plis d'écrasement du tube.

Il a été observé avec une telle jupe deux inconvénients. D'une part, et comme cela est connu par exemple par US-A-4 407 897, l'EVOH est très sensible à l'humidité. Une pâte dentifrice contient couramment 20 à 30 % en masse d'humidité, et dans des tubes multicouches à couche barrière en EVOH, on a constaté de fortes pertes d'arôme d'une telle pâte. Par ailleurs, on a constaté que la rétention des écrasements locaux des tubes rendait le vidage du tube difficile.

On connaît par ailleurs par la demande de brevet GB-A-2 048 209 un tube de produit tel que de la pâte dentifrice, dont la jupe en matière plastique multicouche a une déformabilité convenable pour les pressées successives et une résistance élevée aux décollements interlaminaires. Cette jupe comprend au moins une couche barrière vis-à-vis de l'oxygène en EVOH ou PA (polyamide), une couche en oléfine, et une couche adhésive en oléfine modifiée interposée entre les deux couches précédentes.

Le décollement interlaminaire de ces couches est évité par une limite élastique de la couche adhésive plus faible que celle de la couche barrière et plus forte que celle de la couche en oléfine.
En même temps, l'épaisseur de la couche en oléfine est plus forte que la somme des épaisseurs de la couche barrière et de la couche adhésive, et le produit de la limite élastique par l'épaisseur de la couche en oléfine est de 7 à 170 kg/cm ; ces moyens améliorant la déformabilité et la restauration après chaque pressée du tube. Ce document n'indique pas comment éviter les pertes d'arôme qui sont constatées en l'absence de décollements interlaminaires de la jupe du tube.

La demanderesse a cherché à mettre au point un tube procurant une conservation meilleure de l'arôme ou du parfum d'un produit contenu. Accessoirement, elle a cherché à ce que ce tube permette une distribution du produit plus facile et plus complète.

L'invention a pour objet un tube tel que connu par le premier document cité, caractérisé en ce que l'ensemble des couches situées sur la face intérieure de ladite couche intermédiaire à effet barrière a une épaisseur totale comprise entre 55 et 140 micromètres, de façon à mieux conserver l'arôme ou le parfum d'un produit qui y est ou pourra y être contenu.

L'interprétation de la demanderesse à ce sujet est la suivante : lorsque l'épaisseur desdites couches situées sur la face intérieure de la couche à effet barrière est plus faible que 55 micromètres, l'humidité du produit qui passe à travers ces couches vient dégrader rapidement les qualités de barrière vis-à-vis de l'oxygène et des arômes ou parfums de ladite couche à effet barrière, et les arômes ou parfums du produit peuvent progresser au-delà de cette couche et même s'échapper du tube.

Lorsque l'épaisseur des couches considérées est supérieure à 140 micromètres, l'humidité n'atteint pas la couche intermédiaire à effet barrière en quantité suffisante pour dégrader ses qualités, mais les arômes ou parfums sont absorbés et retenus en quantité importante par lesdites couches. Ces arômes ou parfums sont typiquement des composés en solution dans l'eau contenue dans le produit, et leur évaporation et absorption suivent en première approximation l'évaporation et absorption de l'eau formant ladite humidité du produit.

Le document GB-A-2 048 209 ne permet pas de prévoir de tels effets, malgré leur importance, et il ne donne aucune indication directe ou indirecte sur l'épaisseur des couches situées sur la face intérieure de la couche barrière.

Des résultats encore meilleurs de conservation des arômes ou des parfums du produit contenu dans le tube sont obtenus lorsque l'épaisseur totale des couches situées sur la couche intermédiaire à effet barrière est comprise entre 65 et 130 micromètres, avec comme optimum 70 à 120 micromètres.

Les conditions précédentes permettent l'utilisation pour la structure de la jupe de polyoléfines économiques et donnent un excellent soudage des couches les unes avec les autres, à savoir la famille des polyéthylènes. La demanderesse s'est ainsi intéressée à un tube dans lequel les couches polymériques à base de polyoléfines de la jupe consistent d'une part en une couche superficielle interne en polyéthylène basse ou très basse densité ou linéaire basse densité, de masse spécifique comprise entre 0,86 et 0,93 g/cm³, et d'autre part en d'autres couches qui sont respectivement soit en polyéthylène basse densité (PE.BD) de masse spécifique comprise entre 0,90 et 0,93 g/cm³, soit en polyéthylène haute densité (PE.HD) de masse spécifique comprise entre 0,935 et 0,97 g/cm³.

Voulant alors rendre plus facile et plus complète la distribution du produit stocké dans le tube de l'invention, tube qui conserve mieux l' arôme ou le parfum de ce produit, la demanderesse a déterminé qu'on pouvait éviter les écrasements locaux dûs aux pressées du tube en améliorant la résistance élastique à l'enfoncement de cette jupe. Pour cela, les couches de polyéthylène de la jupe du tube contiennent une ou plusieurs couches en PE.HD d'épaisseur totale supérieure ou égale à 90 micromètres. Les essais montrent ainsi que, quand l'épaisseur totale de PE.HD passe de 84 à 125 micromètres, l'effort de réaction élastique de la jupe à un enfoncement est plus que le double. Lorsque l'épaisseur de la jupe est comprise entre 260 et 380 micromètres, par exemple dans le cas d'un tube dentifrice, ladite épaisseur totale des couches en PE.HD est de préférence comprise entre 100 et 140 micromètres, les couches superficielles étant de préférence en PE.BD, ou bien pour la couche interne en PE linéaire basse densité. En effet, il est recherché pour ces couches superficielles une bonne ductilité avec une bonne aptitude à l'impression pour l'extérieur du tube et une bonne résistance aux micro-fissurations à l'intérieur de ce tube. Les intervalles d'épaisseur totale des PE.HD qui précèdent sont à transposer en valeurs relatives par rapport à l'épaisseur de la jupe si celle-ci est en-dehors de l'intervalle spécifié. On peut tenir compte, pour cette augmentation de réaction élastique de la jupe à un enfoncement, de l'influence de la couche intermédiaire à effet barrière, qui a des caractéristiques plus élevées que le PE.HD en même épaisseur. Pour l'épaisseur de jupe spécifiée ci-dessus, la somme de deux fois l'épaisseur de ladite couche barrière et de l'épaisseur totale des couches en PE.HD est de préférence comprise entre 130 et 180 micromètres, la condition précédente portant sur la seule épaisseur totale des couches en PE.HD étant ou non satisfaite.

Pour faciliter la fabrication en ayant des couches superficielles de la nature précisée ci-dessus, c'est-à-dire typiquement en PE.BD, on préfère utiliser pour obtenir l'épaisseur totale de PE.HD souhaitée :
- soit une première couche de PE.HD qui est insérée entre ladite couche superficielle interne et une première couche intermédiaire en PE.BD elle-même située à l'intérieur de la couche intermédiaire à effet barrière;
- soit une deuxième couche de PE.HD qui est insérée entre une couche externe en PE.BD et une deuxième couche intermédiaire en PE.BD elle-même située à l'extérieur de la couche intermédiaire à effet barrière.

De telles première et deuxième couches de PE.HD sont de façon commode employées simultanément, avec des épaisseurs respectivement comprises entre 10 et 50 micromètres et entre 60 et 140 micromètres.

Cette (ou ces) couche(s) en PE.HD sont typiquement "en continuité de fusion" avec les couches entre lesquelles elles sont insérées, leurs matières étant compatibles en fusion et le procédé de fabrication ayant produit un soudage avec continuité parfaite de structure des couches entre elles. Une couche de PE.HD ainsi insérée peut alors être distinguée sur coupe transversale par des mesures de micro-dureté, pas par l'aspect de la structure. Des couches ainsi soudées sont obtenues par coextrusion de la jupe ou par soudage avec recouvrement des bords d'une ébauche multicouche résultant elle-même d'un ou plusieurs colaminages après assemblages utilisant un revêtement par extrusion de PE fondu.

De façon typique, les première et seconde couches intermédiaires en PE sont chacune liées à une face de la couche intermédiaire à effet barrière qu'elles encadrent par une couche de liaison, souvent en EAA ou en EMA. Les cinq couches en question sont souvent mises en oeuvre sous forme d'un multicouche préparé à l'avance, dans lequel la couche à effet barrière sensible à l'humidité est relativement bien protégée à cet égard.

Parmi les matières des couches intermédiaires à effet barrière de la jupe sensibles à l'humidité, on peut citer : les EVOH et PVOH (alcool polyvinylique) dont la dégradation par l'humidité est décrite dans US-A-4 407 897 cité précédemment, et à un degré de sensibilité moindre les polyamides et les polyamides modifiés, par exemple le polymétaxylylène adipamide (MXD6). Une telle couche intermédiaire à effet barrière a dans la jupe une épaisseur typiquement comprise entre 0,01 et 0,05 mm, il peut y avoir plusieurs couches à effet barrière ayant de préférence ensemble l'épaisseur totale ci-dessus.

Pour rendre plus facile et plus complète la distribution du produit stocké dans le tube de l'invention, la demanderesse a mis au point un second moyen qui peut être utilisé seul ou en combinaison avec le premier moyen imposant une épaisseur minimale des couches PE.HD de la jupe supérieure à 90 micromètres.

Ce second moyen est d'avoir entre la jupe et le goulot du tube, une épaule annulaire écrasable. On sait que l'épaule des tubes connus, de par leurs modes de fabrication, sont rigides et forment une espèce de mur retenant une fraction du produit à distribuer, produit typiquement crémeux ou pâteux. Grâce au procédé de fabrication qui est l'objet de la demande de brevet français No.93 01065 du 27.01.1993 de la demanderesse, on obtient ainsi de préférence un tube dans lequel la tête de distribution comprend un goulot de diamètre plus faible que la jupe et une épaule annulaire reliant le goulot à la jupe, cette épaule étant lisse et d'épaisseur comprise entre 0,9 fois et 1,35 fois et de préférence entre 0,8 fois et 1,25 fois l'épaisseur de la jupe et en continuité de structure avec la jupe et comprenant des plis écrasés et soudés entre eux, ladite épaule étant facilement écrasable latéralement. Ladite épaule et typiquement une partie au moins du goulot du tube contiennent la ou les couches barrière de la jupe du tube sous forme de prolongements pliés et écrasés compris dans les plis écrasés et soudés précédents, qui sont eux-mêmes des prolongements de la ou lesdites couche(s) barrière de la jupe. Le goulot peut être complété par une couronne annulaire en PE soudée à la tête, l'épaule reste à moitié au moins écrasable.

Le second moyen fournit donc à la fois la possibilité d'une distribution plus facile et plus complète du produit contenu dans le tube, et une protection de son arôme ou de son parfum améliorée au niveau de la tête du tube. Les replis amincis par endroits d'une couche barrière dans l'épaule satisfont habituellement ensemble la condition préférentielle d'épaisseur totale "0,01 à 0,05 mm", avec une efficacité renforcée. Le procédé de fabrication aboutissant à ce second moyen sera brièvement décrit dans les Exemples.

### AVANTAGE DE L'INVENTION

- Elle procure, avec une structure économique de la jupe, un moyen de conserver beaucoup mieux l'arôme ou le parfum du produit contenu;
- Elle permet, en outre, selon ses caractéristiques préférentielles, de limiter les écrasements locaux du tube lors des pressées, celles-ci agissant alors sur une portion plus large du tube et étant d'une fois à l'autre facilitées;
- En alternative ou en combinaison avec l'effet de limitation de ces écrasements de la jupe, elle offre la possiblité d'écraser latéralement la tête et ainsi d'expulser plus facilement et plus complètement le produit en fin de distribution.

### EXEMPLES

Les figures 1 à 3 représentent en coupe les jupes de 3 tubes, le premier étant hors invention (fig. 1 témoin), les deux autres (fig. 2 et 3) selon l'invention.

La figure 4 représente, en coupe axiale, une disposition de mesure de la réaction élastique à l'enfoncement d'une jupe de tube, en relation avec le premier moyen entraînant une distribution plus facile et plus complète du produit.

La figure 5 est un graphique représentant la prise de poids d'échantillons de jupes en fonction de l'épaisseur totale des couches intérieures à la couche barrière, dans un test de perte d'arôme.

La figure 6 représente graphiquement la variation de la résistance à l'enfoncement de la jupe en fonction de l'épaisseur totale des couches de PE.HD qui y sont présentes.

Les figures 7 à 10 sont relatives au second moyen entraînant une distribution améliorée, celui d'une épaule écrasable. La figure 7 représente en perspective cavalière un tube de comparaison obtenu par formage à la température ambiante.

La figure 8 représente un tube selon l'invention ayant une épaule écrasable, en demi-coupe axiale.

La figure 9 représente un autre tube à épaule écrasable, muni d'une couronne annulaire en PE constituant l'extérieur de son goulot, en demi-coupe axiale.

La figure 10 représente un aspect micrographique du haut de l'épaule de ce tube et du raccordement de cette épaule avec ladite couronne annulaire, selon une coupe axiale.
1) Structure des jupes des tubes des Fig. 1 à 3
   Ces structures présentent toutes trois une couche intermédiaire à effet barrière 20 de EVOH en épaisseur 0,02 mm, liée par deux couches adhésives 21 et 22 en copolymère EMA (copolymère d'éthylène et d'acide méthacrylique) d'épaisseur 0,01 mm chacune à des couches de PE comprenant en contact avec ces couches de liaison 21 et 22 du PE.BD de masse spécifique 0,92 g/cm³ en couche 1 ou en sous-couche intermédiaire 11 ou 12. Les limites de couches de nature différente sont marquées en traits pleins tandis que les limites invisibles entre sous-couches PE.BD et PE.HD, résultant de leur assemblage dans un état fondu au moins en surface, sont figurées en trait interrompu.
   Le terme "sous-couche" est ici utilisé pour de telles couches dont au moins une surface limite est invisible, ce sont cependant des couches à part entière pour les fonctions techniques étudiées dans la présente invention. Elles peuvent être repérées par des mesures de micro-dureté.
   On peut encore voir, sur les Fig. 1 à 3, que les sous-couches en PE.HD 13 et 14 de masse spécifique 0,95 g/cm³ sont comprises chacune entre une dite sous-couche intermédiaire de PE.BD 11 ou 12 et une sous-couche de PE linéaire basse densité interne 100 ou de PE.BD externe 10.
   En allant de l'intérieur de la jupe vers l'extérieur, les successions d'épaisseurs sont les suivantes, les détails de sous-couches étant indiqués entre parenthèses :
   - Tube A (Fig.1) : couche "1" PE.BD 0,035 mm; couches EMA "21" de 0,01 mm, EVOH "20" de 0,02 mm, EMA "22" de 0,01 mm; couche en PE "12+14+10" de 0,215 mm (PE.BD "12" de 0,082 mm - PE.HD "14" de 0,0105 mm - PE.BD "10" externe de 0,023 mm)
   - Tube B (Fig.2) : couche interne en PE "100+13+11" de 0,09 mm (PE linéaire basse densité interne "100" de 0,01 mm - PE.HD "13" de 0,02 mm - PE.BD "11" de 0,06 mm); succession EMA, EVOH,EMA comme pour A; couche en PE "12+14+10" de 0,215 mm de la même composition que pour A.
   - Tube C (Fig.3) : couche interne "1" en PE.BD 0,125 mm; succession EMA, EVOH,EMA comme pour A et B; couches en PE "12+14+10" de 0,175 mm (PE.BD "12" de 0,073 mm - PE.HD "14" de 0,084 mm - PE.BD "10" externe de 0,018 mm).

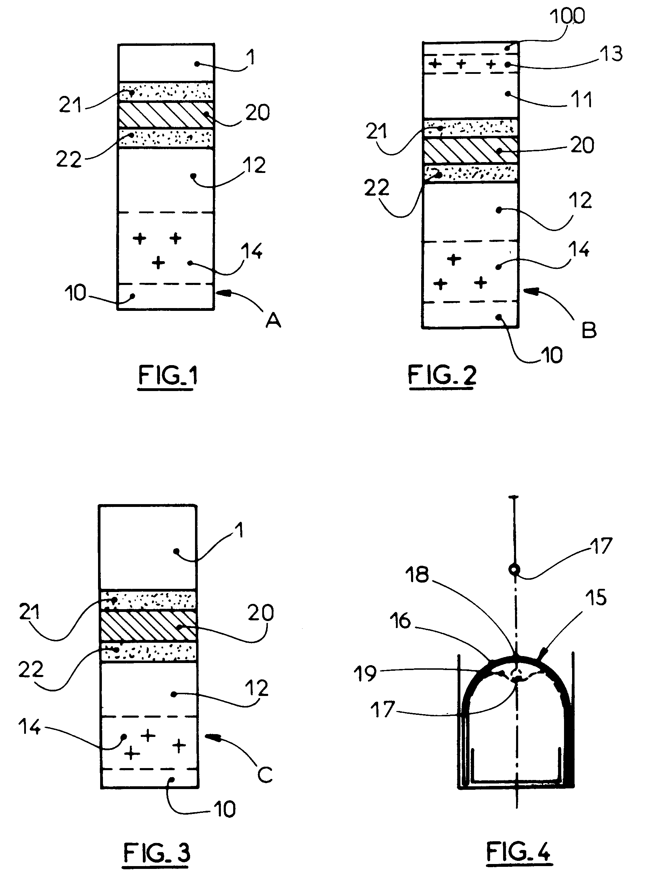

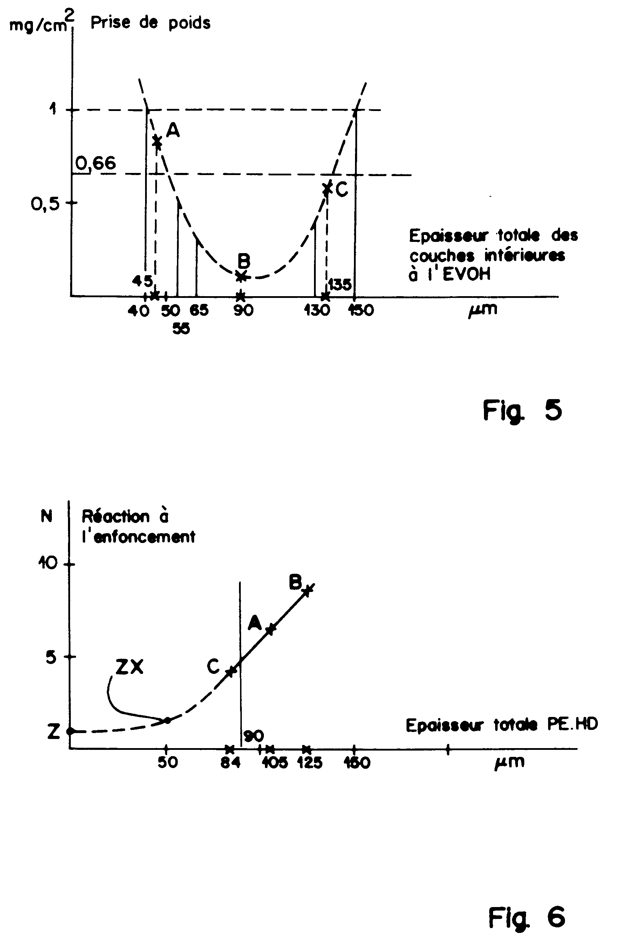

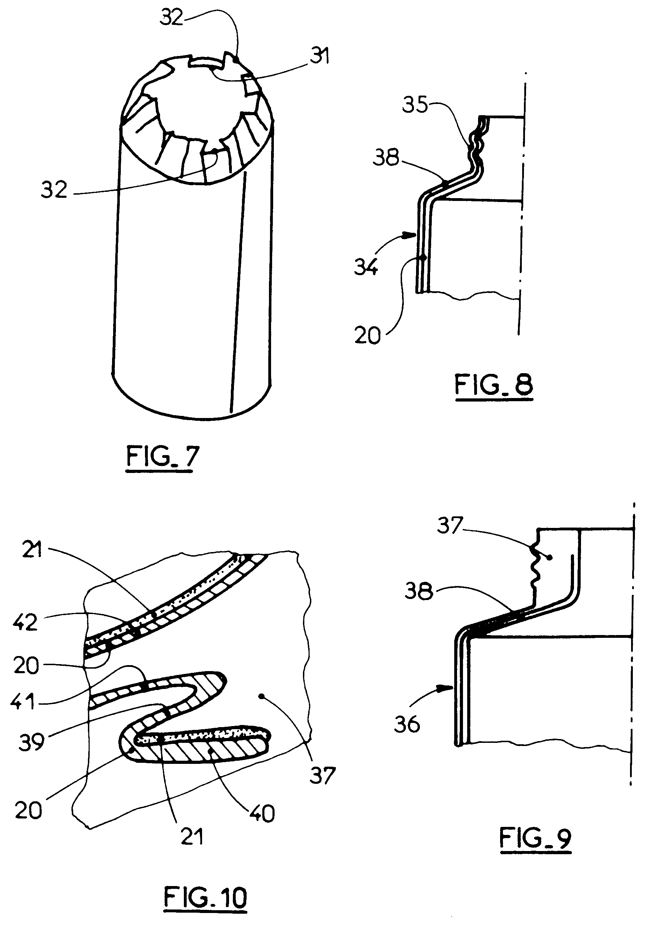

   Les jupes des tubes A, B,C cnt été roulées-soudées à partir de films ébauches ayant les structures et épaisseurs ci-dessus, puis les têtes des tubes ont été surmoulées sur ces jupes.
2) Tests de perte d'arôme
   On a soumis des coupons circulaires de diamètre 50 mm des trois qualités ci-dessus, représentées dans les Fig. 1 à 3, à une imprégnation de leur face interne dans la jupe, celle de la couche 1 ou 100, par une pâte dentifrice standard contenant 25 % d'eau et du menthol : pendant 4 semaines avec maintien dans une enceinte à 38° C.
   En fin de test, l'échantillon est nettoyé de la pâte dentifrice restant en surface. Sa prise de poids est déterminée, elle rend compte de la perte d'eau et d'arôme.
   On souhaite avoir une qualité qui donne, dans ce test, une prise de poids par unité de surface inférieure à 1,2 mg/cm2 et de préférence inférieure à 0,66 mg/cm². A est satisfaisant selon le premier critère, pas selon le deuxième. Les résultats des tests sont portés dans le Tableau 1 et sur la figure 5.
   L'interprétation est la suivante : il n'existe pas d'échantillons dans lequel la couche barrière en EVOH est à nu du côté intérieur à la jupe, car une telle couche en EVOH serait alors complètement dégradée par l'humididé pendant la fabrication du multicouche correspondant. On observerait sur la fig. 5 pour un tel échantillon en fait théorique un résultat de prise de poids élevé, dû à la traversée facile de l'EVOH par l'humidité et à l'absorption de cette humidité par les couches extérieures à l'EVOH. Lorsqu'on a 0,02 mm de couches intérieures à l'EVOH on observe encore une prise de poids importante, plus de 2,5 mg/cm2. La prise de poids décroît fortement lorsque l'épaisseur des couches intérieures à l'EVOH dépasse 0,03 mm, et la portion de la courbe linéaire et abrupte dans laquelle se situe A correspond à une absorption avec dégradation de l'EVOH par l'humidité puis traversée de cet EVOH par l'eau et l'arôme, ceux-ci étant alors absorbés aussi bien par les couches extérieures à l'EVOH 21,12,14 et 10 que par les couches intérieures telles que 21 et 1. La décroissance de A à B correspond à un effet prépondérant de protection de la couche 20 d'EVOH par l'épaisseur croissante des couches intérieures, et la remontée depuis B jusqu'en C correspond à l'influence devenue prépondérante de l'absorption d'eau et d'arôme par les couches intérieures, leur épaisseur et donc leur capacité d'absorption augmentant alors que l'EVOH est suffisamment protégé.
3) Test de pressée ou de résistance à l'enfoncement de la jupe
   Un échantillon 15 de jupe est maintenu de façon à former un dôme 16 cylindrique hémicirculaire reproductible de diamètre 25 mm et de longueur 100 mm, et on vient le presser avec une tige rigide 17 de diamètre 3 mm, selon la génératrice linéaire 18 du sommet de ce dôme. Le tracé en trait interrompu 19 indique la forme prise par le dôme 16 lorsque l'enfoncement de la tige 17 à vitesse constante a progressé.
   Un système (non représenté) mesure la réaction exercée par le dôme 16 ou 19 sur la tige 17, et en détermine le maximum. Lorsque cette réaction est forte, la jupe du tube correspondante résiste mieux aux pressées et son enfoncement reste en partie au moins dans le domaine élastique, permettant d'éviter les étranglements locaux à l'inverse de l'enseignement du document EP-A-0 084 922.
   Les résultats des tests sont portés dans le Tableau 2 et sur la figure 6. Les points figuratifs A, B, C sont alignés sur la figure 6. Comme la réaction en l'absence de PE.HD dans la jupe, alors entièrement en PE.BD à l'exception de l'EVOH et des fines couches adhésives 21 et 22 qui l'encadrent, est forcément faiblement positive (point figuratif Z), on voit que l'effet d'une épaisseur croissante de PE.HD sur la réaction de la jupe à l'enfoncement a une croissance qui s'accélère entre 40 et 70 micromètres (portion de courbe ZX en trait interrompu).
   Au niveau de l'épaisseur 90 micromètres retenue comme minimum, l'effet est confirmé. Le tube B selon l'invention a une jupe résistant bien à l'enfoncement, le tube C est insuffisant à cet égard. Le tube A, insuffisant vis-à-vis des pertes d'arôme et donc situé en-dehors de l'invention revendiquée dans la présente demande, est satifaisant en résistance à l'enfoncement.
4) Second moyen de distribution plus facile et plus complète du produit contenu : tube à épaule écrasable (fig. 7 à 10)
   Le procédé d'obtention de ce tube consiste à partir d'une ébauche tubulaire plus longue que la jupe et à en rétreindre une portion par formage de cette seule portion chauffée au-dessus de la température de fusion de ses couches superficielles, de préférence entre 140 et 220° C dans le cas des couches superficielles en polyéthylène, en y écrasant alors entre des outillages cette portion qui se chiffonne en plis, les plis se soudant parfaitement entre eux sur chaque face, les faces de l'épaule étant typiquement obtenues parfaitement lisses.
   La figure 7 représente un tube ayant une épaule formée à l'ambiante, montrant que les doubles plis tels que 31 et 32 correspondent à des ondulations vers l'intérieur 31 ou vers l'extérieur 32 qui ont été écrasées.
   Dans le formage à chaud indiqué ci-dessus, les plis s'écrasent fortement y compris ceux de la couche barrière 20 qui s'y trouvent inclus. On peut obtenir une épaule 33 plus mince que la jupe. La figure 8 représente un tube 34 à goulot fileté selon l'invention, obtenu directement par ce formage à chaud, l'outillage intérieur et des tiroirs annulaires de l'outillage extérieur formant entre eux le filetage 35 du goulot en fin de serrage. La figure 9 représente un tube 36 de même nature obtenu par formage à chaud et coiffé ensuite d'une couronne annulaire extérieure 37 en PE complétant le goulot du tube. Cette couronne 37 est parfaitement soudée à l'extérieur et à l'extrémité supérieure du tube formé à chaud 36, elle a été mise en place par conformation avec compression d'une ébauche annulaire en PE chauffée à 160° C, il s'agit ainsi d'un moulage dans un état pâteux qui se situe au-dessus du point de fusion. La mise en place d'une couronne annulaire peut aussi être obtenue par moulage par injection ou par soudage par ultra-sons. Les tubes 34 et 36 ont chacun une jupe du type B, d'épaisseur 0,345 mm non modifiée par le formage à chaud de la tête, et leur épaule annulaire 38 a une épaisseur réglée à la demande entre 0,3 et 0,4 mm. Dans le cas du tube 36 (figure 9), la couronne annulaire 37 occupe moins de la moitié de la largeur de l'épaule annulaire 38, celle-ci peut encore s'écraser latéralement de façon suffisante pour améliorer l'expulsion du produit.
   La coupe du tube 36 contenant la jonction de son épaule 38 avec la couronne annulaire 37 (figure 10) montre l'efficacité de l'écrasement et du soudage des plis dans la tête rétreinte, ainsi que le soudage parfait de la couronne annulaire 37 :
   - un double pli 39 de couche barrière 20 montre une extrémité 40 qui a échappé à la superposition et à l'écrasement de plis, suivi de deux plis fortement amincis 41;
   - une deuxième portion 42 de couche barrière 20 appartient à un pli soudé avec le double pli qui contient le double pli 39 de couche barrière 20;
   - sur la droite de l'extrémité 40 et du double pli 39, se trouve la couronne 37, en PE comme les couches superficielles du tube 36;
   - la continuité du soudage entre les plis, et entre ces plis formant l'épaule et la couronne annulaire, est parfaite. La coupe montre par endroits les couches adhésives telles que 21, mais il n'y a aucune autre discontinuité dans le PE qui enveloppe les éléments décrits;
   - l'amincissement obtenu est étonnant, il peut être réglé à la demande par le choix de la température de formage à chaud et par le serrage des outillages.

### APPLICATION INDUSTRIELLE

Tubes à jupe souple en matière plastique donnant une conservation améliorée de l'arôme ou du parfum du produit contenu, par exemple liquide, crémeux ou pâteux. Tubes permettant aussi une distribution plus facile et plus complète du produit. En particulier dans les industries des produits cosmétiques, pharmaceutiques, hygiéniques, alimentaires, et des produits d'entretien.

**TABLEAU 1**

| Prises de poids d'échantillons de jupes après imprégnation de 4 semaines par une pâte dentifrice aromatisée | | |
|---|---|---|
| Tube | Epaisseur des couches situées sur la face intérieure de la couche en EVOH | Prise de poids (mg/cm2) |
| A (témoin) | 45 µm | 0,83 |
| B (invention) | 100 µm | 0,12 |
| C (invention) | 135 µm | 0,59 |

**TABLEAU 2**

| Réaction maximale des jupes de tubes à l'enfoncement dans le test de pressée (Fig.4) | | | | |
|---|---|---|---|---|
| Tube | Epaisseur de la jupe (µm) | Epaisseur totale PE.HD (µm) | Ep.totale PE.HD + 2 x ép.EVOH (µm) | Réaction max. (N) |
| A (témoin) | 290 | 105 | 145 | 6,6 |
| B (invention) | 345 | 125 | 165 | 8,7 |
| C (invention) | 340 | 84 | 124 | 4,2 |

## Revendications

1. Tube (B,C,34,36) de stockage et de distribution d'un produit, par exemple aromatisé ou parfumé et contenant de l'eau, comprenant une tête de distribution (38 et 35) fixée sur une jupe multicouche flexible, cette jupe comportant essentiellement une couche intermédiaire polymérique à effet barrière (20) vis-à-vis de l'oxygène et des arômes ou parfums, ladite couche étant sensible à l'humidité, ainsi que sur chaque face de cette couche intermédiaire une ou plusieurs couches polymériques (1,100,13,11; et 12,14,10) à base de polyoléfines, toutes lesdites couches étant liées de façon continue entre elles, caractérisé en ce que l'ensemble des couches situées sur la face intérieure de ladite couche intermédiaire à effet barrière (1,21; 100,13,11, 21) a une épaisseur totale comprise entre 55 et 140 micromètres, de façon à mieux conserver l'arôme ou le parfum d'un produit qui y est ou pourra y être contenu.

2. Tube selon la revendication 1, dans lequel ladite épaisseur totale des couches (1,21; 100,13,11,21) situées sur ladite face intérieure de la couche intermédiaire est comprise entre 65 et 130 micromètres.

3. Tube selon l'une quelconque des revendications 1 ou 2, dans lequel lesdites couches polymériques à base de polyoléfines consistent d'une part en une couche superficielle interne en polyéthylène basse (1) ou très basse densité ou linéaire basse densité (100), de masse spécifique comprise entre 0,86 et 0,93 g/cm³, et d'autre part en d'autres couches qui sont respectivement soit en polyéthylène basse densité (PE.BD) de masse spécifique comprise entre 0,90 et 0,93 g/cm³, soit en polyéthylène haute densité (PE.HD) de masse spécifique comprise entre 0,935 et 0,97 g/cm³ (13,14).

4. Tube (B,34,36) selon la revendication 3, dans lequel lesdites couches en polyéthylène contiennent une ou plusieurs couches en PE.HD (13,14) d'épaisseur totale au moins égale à 90 micromètres.

5. Tube selon la revendication 4, dans lequel ladite somme des épaisseurs des couches en PE.HD (13,14) est comprise entre 100 et 140 micromètres, l'épaisseur de ladite jupe étant comprise entre 260 et 380 micromètres.

6. Tube selon la revendication 4, dans lequel la somme de deux fois l'épaisseur de ladite couche barrière (20) et desdites épaisseurs des couches en PE.HD (13,14) est comprise entre 130 et 180 micromètres, l'épaisseur de ladite jupe étant comprise entre 260 et 380 micromètres.

7. Tube selon l'une quelconque des revendications 3 à 6, dans lequel lesdites couches de polyéthylène comprennent une première couche (13) de PE.HD qui est insérée entre ladite couche superficielle interne (100) et une première couche intermédiaire (11) en PE.BD elle-même située à l'intérieur de la couche intermédiaire à effet barrière (20).

8. Tube selon l'une quelconque des revendications 3 à 7, dans lequel lesdites couches de polyéthylène comprennent une deuxième couche (14) de PE.HD qui est insérée entre une couche externe (10) en PE.BD et une deuxième couche intermédiaire (12) en PE.BD elle-même située à l'extérieur de la couche intermédiaire à effet barrière (20).

9. Tube selon l'une quelconque des revendications 7 ou 8, dans lequel ladite première couche (13) de PE.HD et/ou ladite deuxième couche de PE.HD (14) est ou sont en continuité de fusion avec lesdites couches de PE.BD (100,11; 12,10) entre lesquelles elle(s) est (sont) insérée(s).

10. Tube (B,34,36) selon la revendication 8 dépendant de la revendication 7, dans lequel les épaisseurs desdites première et seconde couches (13,14) de PE.HD sont respectivement comprises entre 10 et 50 micromètres et entre 60 et 140 micromètres.

11. Tube (B,34,36) selon la revendication 10, dans lequel lesdites première et deuxième couches intermédiaires en PE.BD (11,13) sont chacune liées à une face de ladite couche intermédiaire à effet barrière (20) par une couche de liaison (21,22) en EAA ou en EMA.

12. Tube selon l'une quelconque des revendications 1 à 11, dans lequel ladite couche intermédiaire à effet barrière (20) de la jupe est en l'une des matières du groupe constitué par : les EVOH, PVOH, PA, PA modifiés, et est d'épaisseur comprise entre 0,01 et 0,05 mm.

13. Tube (34,36) selon l'une quelconque des revendications précédentes, dans lequel ladite tête de distribution (38 et 35) comprend un goulot (35) de diamètre plus faible que la jupe et une épaule annulaire (38) reliant le goulot (35) à la jupe, cette épaule étant d'épaisseur comprise entre 0,9 fois et 1,35 fois l'épaisseur de la jupe et en continuité de structure avec ladite jupe et comprenant des plis écrasés et soudés entre eux, ladite épaule (38) étant écrasable latéralement.

14. Tube (36) selon la revendication 13, dans lequel les plis écrasés et soudés entre eux de ladite épaule contiennent des prolongements pliés et écrasés (39,41) de ladite couche intermédiaire à effet barrière (20) de la jupe.

## Claims

1. A tube (B, C, 34, 36) for the storage and distribution of a product which is for example flavoured or scented and which contains water, comprising a distribution head (38 and 35) which is feed on a flexible multi-layer skirt, said skirt essentially comprising an intermediate polymeric layer (20) with a barrier effect relative to oxygen and flavouring or scents, said layer being sensitive to moisture, and on each face of said intermediate layer one or are polymeric layers (1, 100, 13, 11 and 12, 14, 10) based on polyolefins, all said layers being continuously joined together, characterised in that the assembly of the layers which are disposed on the internal face of said intermediate barrier-effect layer (1, 21; 100, 13, 11, 21) is of a total thickness of between 55 and 140 micrometres, so as better to preserve the flavouring or the scent of a product which is or may be contained therein.

2. A tube according to clam 1 wherein said total thickness of the layers (1, 21; 100, 13, 11, 21) which are disposed on said internal face of the intermediate layer is between 65 and 130 micrometres.

3. A tube according to either one of claims 1 and 2 wherein said polymeric layers based on polyolefins consist on the one hand of an internal surface layer of low density (1) or very low density or linear low density (100) polyethylene, of a specific mass of between 0.86 and 0.93 g/cm³, and on the other hand other layers which are respectively either of low density polyethylene (LDPE) of a specific mass of between 0.90 and 0.93 g/cm³ or high density polyethylene (HDPE) of a specific mass of between 0.935 and 0.97 g/cm³ (13, 14).

4. A tube (B, 34, 36) according to claim 3 wherein said layers of polyethylene contain one or more layers of HDPE (13, 14) of a total thickness which is at least equal to 90 micrometres.

5. A tube according to claim 4 wherein said sum of the thicknesses of the layers of HDPE (13, 14) is between 100 and 140 micrometres, the thickness of said skirt being between 260 and 380 micrometres.

6. A tube according to claim 4 wherein the sun of twice the thickness of said barrier layer (20) and said thicknesses of the layers of HDPE (13, 14) is between 130 and 180 micrometres, the thickness of said skirt being between 260 and 380 micrometres.

7. A tube according to any one of claim 3 to 6 wherein said layers of polyethylene comprise a first layer (13) of HDPE which is inserted between said internal surface layer (100) and a first intermediate layer (11) of LDPE which is itself disposed on the interior of the intermediate barrier-effect layer (20).

8. A tube according to any one of claims 3 to 7 wherein said layers of polyethylene comprise a second layer (14) of HDPE which is inserted between an external layer (10) of LDPE and a second intermediate layer (12) of LDPE which is itself disposed on the exterior of the intermediate barrier-effect layer (20).

9. A tube according to either one of claims 7 and 8 wherein said first layer (13) of HDPE and/or said second layer (14) of HDPE is or are in a condition of continuity of fusion with said layers of LDPE (100, 11; 12, 10) between which it or they is or are inserted.

10. A tube (B, 34, 36) according to claim 8 when appended to claim 7 wherein the thicknesses of said first and second layers (13, 14) of HDPE are respectively between 10 and 50 micrometres and between 60 and 140 micrometres.

11. A tube (B, 34, 36) according to claim 10 wherein said first and second intermediate layers (11, 13) of LDPE are each joined to a face of said intermediate barrier-effect layer (20) by a bonding layer (21, 22) of EAA or EMA.

12. A tube according to any one of claims 1 to 11 wherein said intermediate barrier-effect layer (20) of the skirt is of one of the materials of the group formed by: EVOH, PVOH, PA, and modified PA, and is of a thickness of between 0.01 and 0.05 mm.

13. A tube (34, 36) according to any one of the preceding claims wherein said distribution head (38 and 35) comprises a neck (35) of smaller diameter than the skirt and an annular shoulder (38) connecting the neck (35) to the skirt, said shoulder being of a thickness of between 0.9 times and 1.35 times the thickness of the skirt and affording continuity of structure with said skirt and comprising folds which are squashed and welded to each other, said shoulder (38) being squashable laterally.

14. A tube (36) according to claim 13 wherein the folds of said shoulder which are squashed and welded together contain folded and squashed prolongations (39, 41) of said intermediate barrier-effect layer (20) of the skirt.

## Patentansprüche

1. Tube (B, C, 34, 36) zum Lagern und Abgeben eines wasserhaltigen, beispielsweise aromatisierten oder parfümierten Produkts, mit einem Abgabekopf (38 und 35), der an einem flexiblen Vielschichtmantel befestigt ist, wobei der Mantel notwendigerweise eine Polymer-Zwischenschicht mit Sperrwirkung (20) für Sauerstoff und Aromen oder Duftstoffe, die gegen Feuchtigkeit empfindlich ist, sowie auf jeder Seite dieser Zwischenschicht ein oder mehrere Polymerschichten (1, 100, 13, 11; und 12, 14, 10) auf Polyolefingrundlage umfaßt, wobei alle diese Schichten kontinuierlich untereinander verbunden sind, dadurch gekennzeichnet, daß die Gesamtheit der an der Innenseite der Zwischenschicht mit Sperrwirkung liegenden Schichten (1, 21; 100, 13, 11, 21) eine Gesamtdicke zwischen 55 und 140 µm hat, so daß das Aroma oder der Duft eines Produkts, das darin enthalten ist oder später enthalten sein kann, besser erhalten bleibt.

2. Tube nach Abspruch 1, bei der die Gesamtdicke der an der Innenseite der Zwischenschicht liegenden Schichten (1, 21; 100, 13, 11, 21) zwischen 65 und 130 µm liegt.

3. Tube nach einem der Ansprüche 1 oder 2, bei der die Polymerschichten auf Polyolefingrundlage einesteils aus einer inneren Oberflächenschicht aus Polyethylen niedriger oder sehr niedriger Dichte (1) oder aus linearem Polyethylen niedriger Dichte (100) mit einem spezifischen Gewicht zwischen 0,86 und 0,93 g/cm³ und anderenteils aus anderen Schichten besteht, die jeweils aus Polyethylen niedriger Dichte (PE-LD) mit spezifischem Gewicht zwischen 0,90 und 0,93 g/cm³ oder aus Polyethylen hoher Dichte (PE-HD) mit spezifischem Gewicht zwischen 0,935 und 0,97 g/cm³ (13, 14) bestehen.

4. Tube (B, 34, 36) nach Anspruch 3, bei der die Polyethylenschichten eine oder mehrere Schichten aus PE-HD (13, 14) mit einer Gesamtdicke von mindestens gleich 90 µm enthalten.

5. Tube nach Anspruch 4, bei der die Summe der Dicken der PE-HD-Schichten (13, 14) zwischen 100 und 140 µm liegt und die Dicke des Mantels zwischen 260 und 380 µm liegt.

6. Tube nach Anspruch 4, bei der die Summe der verdoppelten Dicke der Sperrschicht (20) und der Dicken der PE-HD-Schichten (13, 14) zwischen 130 und 180 µm liegt und die Dicke des Mantels zwischen 260 und 380 µm liegt.

7. Tube nach einem der Ansprüche 3 bis 6, bei der die Polyethylenschichten eine erste PE-HD-Schicht (13) umfassen, die zwischen der inneren Oberflächenschicht (100) und einer ersten Zwischenschicht (11) aus PE-LD eingefügt ist, die ihrerseits innerhalb der Zwischenschicht mit Sperrwirkung (20) liegt.

8. Tube nach einem der Ansprüche 3 bis 7, bei der die Polyethylenschichten eine zweite PE-HD-Schicht (14) umfassen, die zwischen einer äußeren PE-LD-Schicht (10) und einer zweiten Zwischenschicht (12) aus PE-LD eingefügt ist, die ihrerseits außerhalb der Zwischenschicht mit Sperrwirkung (20) liegt.

9. Tube nach einem der Ansprüche 7 oder 8, bei der die erste PE-HD-Schicht (13) und/oder die zweite PE-HD-Schicht (14) schmelzkontinuierlich mit den PE-LD-Schichten (100, 11; 12, 10) verbunden ist/sind, zwischen denen sie eingefügt ist/sind.

10. Tube (B, 34, 36) nach Anspruch 8, abhängig von Anspruch 7, bei der die Dicken der ersten und der zweiten PE-HD-Schicht (13, 14) jeweils zwischen 10 und 50 µm bzw. zwischen 60 und 140 µm liegen.

11. Tube (B, 34, 36) nach Anspruch 10, bei der die erste und die zweite PE-LD-Zwischenschicht (13, 14) jeweils mit einer Seite der Zwischenschicht mit Sperrwirkung (20) durch eine Verbindungsschicht (21, 22) aus EMA oder EAA verbunden sind.

12. Tube nach einem der Ansprüche 1 bis 11, bei der die Zwischenschicht mit Sperrwirkung (20) des Mantels aus einem Material der Gruppe der EVAs, PVAs, PAs und der modifizierten Pas besteht und eine Dicke zwischen 0,01 und 0,05 mm hat.

13. Tube (34, 36) nach einem der vorhergehenden Ansprüche, bei der Abgabekopf (38 und 35) einen Hals (35) mit kleinerem Durchmesser als der Mantel und eine ringförmige Schulter (38) umfaßt, die den Hals (35) mit dem Mantel (38) verbindet, wobei die Schulter eine Dicke zwischen dem 0,9fachen und dem 1,35fachen der Dicke des Mantels hat, in struktureller Kontinuität mit dem Mantel steht und flachgedrückte, untereinander verschweißte Falten aufweist, wobei diese Schulter (38) seitlich zusammendrückbar ist.

14. Tube (36) nach Anspruch 13, bei der die flachgedrückten, untereinander verschweißten Falten gefaltete und flachgedrückte Verlängerungen (39, 41) der Zwischenschicht mit Sperrwirkung (20) des Mantels enthalten.
